(19) Europäisches Patentamt
European Patent Office
Office européen des brevets

(11) **EP 3 732 473 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **18833845.3**

(22) Anmeldetag: **13.12.2018**

(51) Internationale Patentklassifikation (IPC):
*G01N 27/02* (2006.01)     *G01N 27/22* (2006.01)

(52) Gemeinsame Patentklassifikation (CPC):
**G01N 27/22; G01N 27/026;** Y02T 10/12

(86) Internationale Anmeldenummer:
**PCT/EP2018/084746**

(87) Internationale Veröffentlichungsnummer:
**WO 2019/129500 (04.07.2019 Gazette 2019/27)**

(54) **VERFAHREN ZUM BESTIMMEN EINER QUALITÄTSEIGENSCHAFT EINER BETRIEBSFLÜSSIGKEIT IN EINEM BETRIEBSFLÜSSIGKEITSBEHÄLTER FÜR EIN KRAFTFAHRZEUG UND BETRIEBSFLÜSSIGKEITSBEHÄLTER ZUM DURCHFÜHREN DES VERFAHRENS**

METHOD FOR DETERMINING A QUALITY PROPERTY OF AN OPERATING LIQUID IN AN OPERATING LIQUID CONTAINER FOR A MOTOR VEHICLE, AND OPERATING LIQUID CONTAINER FOR CARRYING OUT THE METHOD

PROCÉDÉ POUR LA DÉTERMINATION D'UNE PROPRIÉTÉ DE QUALITÉ D'UN LIQUIDE DE FONCTIONNEMENT DANS UN RÉCIPIENT À LIQUIDE DE FONCTIONNEMENT POUR UN VÉHICULE AUTOMOBILE ET RÉCIPIENT À LIQUIDE DE FONCTIONNEMENT POUR RÉALISER LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2017 DE 102017223853**

(43) Veröffentlichungstag der Anmeldung:
**04.11.2020 Patentblatt 2020/45**

(73) Patentinhaber: **Kautex Textron GmbH & Co. KG**
**53229 Bonn (DE)**

(72) Erfinder:
• **KRIEGER, Karl-Ludwig**
**26835 Brinkum (DE)**
• **HAPPEL, Jakob**
**29614 Soldau (DE)**
• **WOLF, Hartmut**
**53639 Königswinter (DE)**

(74) Vertreter: **Richly & Ritschel Patentanwälte PartG mbB**
**Sattlerweg 20**
**51429 Bergisch Gladbach (DE)**

(56) Entgegenhaltungen:
WO-A1-2017/142553     US-A1- 2003 046 985
US-A1- 2003 222 656    US-A1- 2004 257 094
US-B1- 6 212 956       US-B1- 6 377 052
US-B2- 8 854 058

EP 3 732 473 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zum Bestimmen einer elektrischen Leitfähigkeit einer Betriebsflüssigkeit in einem Betriebsflüssigkeitsbehälter für ein Kraftfahrzeug. Ferner betrifft die vorliegende Erfindung einen Betriebsflüssigkeitsbehälter zum Durchführen des Verfahrens.

Im Folgenden wird auch auf als Wasserbehälter ausgebildete Betriebsflüssigkeitsbehälter Bezug genommen, die für den Einsatz in einem Kraftfahrzeug ausgebildet sind. Betriebsflüssigkeitsbehälter im Sinne der Erfindung sind insbesondere aber nicht ausschließlich Wasserbehälter für Kraftfahrzeuge zur Bevorratung von beispielsweise in einen Ansaugtrakt einer Brennkraftmaschine zu injizierendes Wasser, Wischwasserbehälter, Harnstoffbehälter, Kraftstoffbehälter (für Ottokraftstoffe oder Dieselkraftstoffe), Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen.

Die Wassereinspritzung ist ein Verfahren zur Leistungssteigerung von Verbrennungskraftmaschinen. Um die Maximaltemperatur bei Höchstleistung nicht zu überschreiten, wird destilliertes Wasser in den Ansaugtrakt einer Verbrennungskraftmaschine eingespritzt. Die verdunstende Flüssigkeit hat eine kühlende Wirkung und vermindert die Verdichtungsarbeit. Auch eine Einspritzung während des Verbrennungstaktes zur Dampfkrafterzeugung und zur Reduktion der Abgastemperatur und damit zur Reduktion des Abgasgegendruckes wird praktiziert. Mittels Wassereinspritzung kann der Schadstoffausstoß, insbesondere von Stickoxiden, von Verbrennungsmotoren gesenkt werden. Das in den Luft-Ansaugtrakt eingespritzte Wasser bewirkt durch die aufzubringende Verdunstungswärme eine effektive Ladeluftkühlung und erreicht dadurch auch eine Innenkühlung des Motors. Durch die kältere Verbrennungsluft und damit deren höhere Dichte ergibt sich eine Leistungssteigerung.

Für die Wassereinspritzung soll lediglich destilliertes bzw. deionisiertes Wasser verwendet werden, um Verbrennungen von Beimischungen und Ablagerungen in der Injektionseinrichtung zu vermeiden, so dass der Schadstoffausstoß eines Kraftfahrzeugs nicht erhöht wird. So ist Leitungswasser nicht für Wassereinspritzung geeignet.

Folglich ist bei als Wasserbehältern ausgebildeten Betriebsflüssigkeitsbehältern für Kraftfahrzeuge eine elektrische Leitfähigkeit des Wassers im Wasserbehälter eine zu überwachende Qualitätseigenschaft. Destilliertes bzw. deionisiertes Wasser weist eine erheblich verminderte Leitfähigkeit im Vergleich zu beispielsweise Leitungswasser auf.

In der WO 2017/142253 A1 wird eine Vorrichtung und ein Verfahren zum Bestimmen von Konzentrationen von Inhaltsstoffen innerhalb eines Tanks beschrieben, der für IT-Anwendungen verwendet wird. Die Vorrichtung umfasst dabei zwei Elektroden, die mit einem Potentiometer elektrisch verbunden sind. Das Potentiometer wiederum ist mit einem Frequenzanalysator verbunden.

Der vorliegenden Erfindung liegt die Aufgabe zugrunde, ein Verfahren zum Bestimmen einer elektrischen Leitfähigkeit einer Betriebsflüssigkeit in einem Betriebsflüssigkeitsbehälter für ein Kraftfahrzeug bereitzustellen.

Die der vorliegenden Erfindung zugrundeliegende Aufgabe wird durch ein Verfahren gemäß Anspruch 1 der vorliegenden Erfindung gelöst. Vorteilhafte Ausgestaltungen des sind in den von Anspruch 1 abhängigen Ansprüchen beschrieben.

Im Genaueren wird die der vorliegenden Erfindung zugrundeliegende Aufgabe durch ein Verfahren zum Bestimmen einer elektrischen Leitfähigkeit einer Betriebsflüssigkeit in einem Betriebsflüssigkeitsbehälter für ein Kraftfahrzeug gelöst, wobei der Betriebsflüssigkeitsbehälter zumindest einen an einer Behälterwand des Betriebsflüssigkeitsbehälters befestigten Kondensator mit einer ersten Elektrode und einer dieser gegenüberliegenden zweiten Elektrode aufweist. Das erfindungsgemäße Verfahren ist durch folgende Verfahrensschritte A, B, C und D gekennzeichnet:

A) Anlegen von zumindest drei unterschiedlichen Wechselspannungen an den Kondensator, wobei eine erste Frequenz einer ersten Wechselspannung einer unteren Grenzfrequenz, eine zweite Frequenz einer zweiten Wechselspannung einer Frequenz zwischen der unteren Grenzfrequenz und einer oberen Grenzfrequenz und eine dritte Frequenz einer dritten Wechselspannung der oberen Grenzfrequenz entspricht;
B) Bestimmen und Speichern einer ersten Impedanz des Kondensators für die erste Frequenz, einer zweiten Impedanz des Kondensators für die zweite Frequenz und einer dritten Impedanz des Kondensators für die dritte Frequenz;
C) Bestimmen eines ersten Phasenwinkels aus der ersten Impedanz, eines zweiten Phasenwinkels aus der zweiten Impedanz und eines dritten Phasenwinkels aus der dritten Impedanz; und
D) Bestimmen (D), dass die im Betriebsflüssigkeitsbehälter befindliche Betriebsflüssigkeit einer Qualitätsanforderung genügt, wenn der zweite Phasenwinkel größer als der erste Phasenwinkel und größer als der dritte Phasenwinkel ist.

Das erfindungsgemäße Verfahren weist den Vorteil auf, dass eine Bestimmung, ob eine im Betriebsflüssigkeitsbehälter befindliche Betriebsflüssigkeit einer vorgegebenen Qualitätsanforderung entspricht, zuverlässig ohne direkten Kontakt einer Messeinrichtung, im vorliegenden Fall des Kondensators, mit der Betriebsflüssigkeit ermöglicht ist. Die vorbestimmte Qualitätsanforderung korreliert mit der elektrischen Leitfähigkeit der Betriebsflüssigkeit. Somit kann durch Bestimmen der elektrischen Leitfähigkeit der im Betriebsflüssigkeitsbehälterinnenraum befindlichen Betriebsflüssigkeit auf Qualitätseigenschaften der Betriebsflüssigkeit rückgeschlossen werden.

Die frequenzabhängige Impedanz des Kondensators hängt von der elektrischen Leitfähigkeit des Mediums ab, das von dem elektrischen Wechselfeld zwischen der ersten Elektrode und der zweiten Elektrode durchdrungen wird. Somit hängt die frequenzabhängige Impedanz des Kondensators von dem Material der Behälterwand und von der im Betriebsflüssigkeitsbehälterinnenraum befindlichen Betriebsflüssigkeit ab.

Die Anmeldmelderin hat herausgefunden, dass der Verlauf der Impedanz des Kondensators über die Frequenz der angelegten Wechselspannung eindeutige Rückschlüsse auf Qualitätseigenschaften der Betriebsflüssigkeit ermöglicht. So hat die Anmelderin festgestellt, dass der Phasenwinkel der Impedanz zwischen einer unteren Grenzfrequenz und einer oberen Grenzfrequenz ein Maximum aufweist, wenn die elektrische Leitfähigkeit der Betriebsflüssigkeit niedrig ist. Dabei hängen die untere Grenzfrequenz und die obere Grenzfrequenz der an den Kondensator angelegten Wechselspannung von der Geometrie des Kondensators und der Größe der Elektroden des Kondensators und dem Abstand der Elektroden des Kondensators voneinander ab.

Die Anmelderin hat festgestellt, dass der frequenzabhängige Phasenverlauf der Impedanz des Kondensators für eine elektrische Leitfähigkeit zwischen 1 $\mu$S/cm und 50 $\mu$S/cm aufweisendes deionisiertes Wasser innerhalb des Betriebsflüssigkeitsbehälters in einem Frequenzbereich zwischen 10 kHz und 1 MHz ein Maximum aufweist. Der Frequenzbereich kann sich jedoch in Abhängigkeit der Größe und der Geometrie des Kondensators verändern.

Der Betriebsflüssigkeitsbehälter ist vorzugsweise ein Betriebsflüssigkeitsbehälter für ein Kraftfahrzeug. Weiter vorzugsweise ist der Betriebsflüssigkeitsbehälter als Wasserbehälter für ein Kraftfahrzeug zur Aufnahme von Wasser ausgebildet, das zur Injektion in eine Brennkraftmaschine des Kraftfahrzeugs vorgesehen ist.

Bei dem Verfahrensschritt A des Anlegens von zumindest drei unterschiedlichen Wechselspannungen an den Kondensator werden vorzugsweise eine Vielzahl, also mehr als drei unterschiedliche Wechselspannungen mit jeweils unterschiedlichen Frequenzen in einem Frequenzbereich zwischen der unteren Grenzfrequenz und der oberen Grenzfrequenz an den Kondensator angelegt.

Sowohl die untere Grenzfrequenz als auch die obere Grenzfrequenz sind von der Geometrie und den Abmessungen des Kondensators abhängig und können daher variieren. Die untere Grenzfrequenz beträgt 10 kHz und die obere Grenzfrequenz 1 MHz oder 100 kHz.

Die Frequenzabstände der jeweiligen zueinander benachbarten Wechselspannungen sind vorzugsweise variabel und hängen von der Geometrie und den Abmessungen des Kondensators und von der zu erreichenden Messauflösung ab. Insbesondere Beträgt der Frequenzabstand zwischen den Frequenzen der unterschiedlichen Wechselspannungen 1 kHz.

Der Verfahrensschritt B kann auch wie folgt formuliert werden: Bestimmen und Speichern der frequenzabhängigen Impedanzen des Kondensators für die unterschiedlichen Wechselspannungen.

Der Phasenwinkel ist der Winkel zwischen der am Kondensator anliegenden Spannung und des durch den Kondensator fließenden Stroms.

Folglich wird im Verfahrensschritt C ein frequenzabhängiger Phasenverlauf zwischen der Spannung und dem Strom bestimmt.

Bei dem Verfahrensschritt D ist die Bedingung, dass der zweite Phasenwinkel größer als der erste Phasenwinkel und größer als der dritte Phasenwinkel ist, gleichbedeutend damit, dass der Verlauf des Phasenwinkels zwischen der unteren Grenzfrequenz und der oberen Grenzfrequenz ein Maximum aufweist.

Vorzugsweise ist das Verfahren derart ausgebildet, dass dieses einen Verfahrensschritt D1 des Ausgebens eines Freigabesignals aufweist, wenn der zweite Phasenwinkel größer als der erste Phasenwinkel und größer als der dritte Phasenwinkel ist.

Durch Ausgabe eines Freigabesignals kann insbesondere einer Steuerungseinrichtung des Kraftfahrzeugs signalisiert werden, dass die im Betriebsflüssigkeitsbehälterinnenraum befindliche Betriebsflüssigkeit einer vorgegebenen Qualitätsanforderung entspricht, so dass ein Betrieb des Kraftfahrzeugs ermöglicht ist.

Vorzugsweise ist das Verfahren derart ausgebildet, dass dieses einen Verfahrensschritt E des Ausgebens eines Warnsignals aufweist, wenn der dritte Phasenwinkel größer als der zweite Phasenwinkel oder gleich dem zweiten Phasenwinkel ist.

Bei dem Verfahrensschritt E des Ausgebens eines Warnsignals wird dieses folglich lediglich dann ausgegeben, wenn in einem frequenzabhängigen Verlauf des Phasenwinkels zwischen der unteren Grenzfrequenz und der oberen Grenzfrequenz kein Maximum des Phasenwinkels bestimmbar ist.

Wenn zwischen der unteren Grenzfrequenz und der oberen Grenzfrequenz kein Maximum des Phasenwinkels bestimmbar ist, eine Differenz zwischen dem dritten Phasenwinkel und dem ersten Phasenwinkel jedoch größer als ein vorgegebener Minimalverlustwinkel ist, dann weist die im Betriebsflüssigkeitsbehälterinnenraum befindliche Betriebsflüssigkeit eine Qualität auf, die noch ausreichend ist. Jedoch wird ein Warnsignal ausgegeben, so dass ein Benutzer des Kraftfahrzeugs, in dem der Betriebsflüssigkeitsbehälter verbaut ist, darauf hingewiesen werden kann, dass die im Betriebsflüssigkeitsbehälterinnenraum befindliche Betriebsflüssigkeit eine verminderte Qualität aufweist, die jedoch für den Betrieb des Kraftfahrzeugs noch ausreichend ist.

Unter einem Verlustwinkel ist die Differenz von -90° und dem Phasenwinkel der Impedanz zu verstehen.

Vorzugsweise ist das Verfahren derart ausgebildet, dass dieses einen Verfahrensschritt F des Ausgebens eines Stoppsignals aufweist, wenn eine Differenz zwischen dem dritten Phasenwinkel und dem ersten Phasenwinkel kleiner als ein vorgegebener Minimalverlustwinkel ist.

Wenn die Differenz zwischen dem dritten Phasenwinkel und dem ersten Phasenwinkel kleiner als ein vorgegebener Minimalverlustwinkel ist, dann weist die im Betriebsflüssigkeitsbehälterinnenraum befindliche Betriebsflüssigkeit eine Qualität auf, die für den Betrieb des Kraftfahrzeugs nicht ausreichend ist und eine Beschädigung des Kraftfahrzeugs bzw. von Einbauten des Kraftfahrzeugs, z.B. eine Wasserinjektionseinrichtung oder eine Verbrennungskraftmaschine, verursachen könnte. Somit kann durch Ausgabe des Stoppsignals ein Betrieb des Kraftfahrzeugs verhindert werden.

Weiterhin wird ein Verfahren zum Bestimmen einer elektrischen Leitfähigkeit einer Betriebsflüssigkeit in einem Betriebsflüssigkeitsbehälter für ein Kraftfahrzeug beschrieben, wobei der Betriebsflüssigkeitsbehälter zumindest einen an einer Behälterwand des Betriebsflüssigkeitsbehälters befestigten Kondensator mit einer ersten Elektrode und einer dieser gegenüberliegenden zweiten Elektrode aufweist. Das Verfahren ist nicht Teil der Erfindung. Das Verfahren ist durch folgende Verfahrensschritte G, H, I und J gekennzeichnet:

G) Anlegen von zumindest zwei unterschiedlichen Wechselspannungen an den Kondensator, wobei eine erste Frequenz einer ersten Wechselspannung einer unteren Grenzfrequenz und eine zweite Frequenz einer zweiten Wechselspannung einer oberen Grenzfrequenz entspricht;
H) Bestimmen und Speichern einer ersten Kapazität des Kondensators für die erste Frequenz und einer zweiten Kapazität des Kondensators für die zweite Frequenz;
I) Ermitteln einer relativen Abweichung der zweiten Kapazität von der ersten Kapazität; und
J) Bestimmen, dass die im Betriebsflüssigkeitsbehälter befindliche Betriebsflüssigkeit einer vorgegebenen Qualitätsanforderung genügt, wenn die relative Abweichung der zweiten Kapazität von der ersten Kapazität größer als eine erste Mindestabweichung ist.

Das Verfahren weist den Vorteil auf, dass eine Bestimmung, ob eine im Betriebsflüssigkeitsbehälter befindliche Betriebsflüssigkeit einer vorgegebenen Qualitätsanforderung entspricht, zuverlässig ohne direkten Kontakt einer Messeinrichtung, im vorliegenden Fall des Kondensators, mit der Betriebsflüssigkeit ermöglicht ist. Die vorbestimmte Qualitätsanforderung korreliert mit der Kapazität des Kondensators, die wiederum von dem Medium abhängt, den das elektrische Wechselfeld zwischen der ersten Elektrode und der zweiten Elektrode des Kondensators durchdringt. Somit kann durch Bestimmen der frequenzabhängigen Kapazität des Kondensators auf Qualitätseigenschaften der Betriebsflüssigkeit rückgeschlossen werden.

Die frequenzabhängige Kapazität des Kondensators hängt von der elektrischen Leitfähigkeit des Mediums ab, das von dem elektrischen Wechselfeld zwischen der ersten Elektrode und der zweiten Elektrode des Kondensators durchdrungen wird. Somit hängt die frequenzabhängige Kapazität des Kondensators von dem Material der Behälterwand und von der im Betriebsflüssigkeitsbehälterinnenraum befindlichen Betriebsflüssigkeit ab.

Der Verlauf der Kapazität des Kondensators über die Frequenz der angelegten Wechselspannung ermöglicht eindeutige Rückschlüsse auf Qualitätseigenschaften der Betriebsflüssigkeit. Der Verlauf der Kapazität des Kondensators zwischen einer unteren Grenzfrequenz und einer oberen Grenzfrequenz muss eine gewisse Abweichung, beispielsweise einen gewissen Abfall aufweisen, wenn die elektrische Leitfähigkeit der Betriebsflüssigkeit niedrig ist. Dabei hängen die untere Grenzfrequenz und die obere Grenzfrequenz der an den Kondensator angelegten Wechselspannung von der Geometrie des Kondensators und der Größe der Elektroden des Kondensators und dem Abstand der Elektroden des Kondensators voneinander ab.

Die Kapazität des Kondensators weicht für eine elektrische Leitfähigkeit zwischen 1 $\mu$S/cm und 50 $\mu$S/cm aufweisendes deionisiertes Wasser innerhalb des Betriebsflüssigkeitsbehälters in einem Frequenzbereich zwischen 10 kHz und 1 MHz um zumindest 20% ab. Somit beträgt die Differenz zwischen der Kapazität des Kondensators bei einer Frequenz von 1 MHz und der Kapazität des Kondensators bei einer Frequenz von 10 kHz zumindest 20%. Der Frequenzbereich kann sich jedoch in Abhängigkeit der Größe und der Geometrie des Kondensators verändern.

Der Betriebsflüssigkeitsbehälter ist vorzugsweise ein Betriebsflüssigkeitsbehälter für ein Kraftfahrzeug. Weiter vorzugsweise ist der Betriebsflüssigkeitsbehälter als Wasserbehälter für ein Kraftfahrzeug zur Aufnahme von Wasser ausgebildet, das zur Injektion in eine Brennkraftmaschine des Kraftfahrzeugs vorgesehen ist.

Bei dem Verfahrensschritt I des Ermittelns der relativen Abweichung der zweiten Kapazität von der ersten Kapazität wird folgende Berechnung durchgeführt:

$$delta = |Cfmin - Cfmax| / Cfmin$$

Dabei ist:

- fmin die untere Grenzfrequenz
- fmax die obere Grenzfrequenz
- Cfmin die erste Kapazität des Kondensators bei einer die untere Grenzfrequenz fmin aufweisenden Wechselspannung
- Cfmax die zweite Kapazität des Kondensators bei einer die obere Grenzfrequenz fmax aufweisenden Wechselspannung
- delta die relative Abweichung der zweiten Kapazität Cfmax von der ersten Kapazität Cfmin

Die erste Mindestabweichung beträgt vorzugsweise mehr als 0,2.

Für deionisiertes Wasser und einer unteren Grenzfrequenz von 10 kHz und einer oberen Grenzfrequenz von 100 kHz beträgt die Mindestabweichung beispielsweise etwa 0,2, wenn die Elektroden des Kondensators eine Längenerstreckung von 100 mm, eine Breitenerstreckung von 50 mm und einen Abstand der ersten Elektrode zur zweiten Elektrode von 10 mm aufweisen.

Bei der vorgegebenen Qualitätsanforderung handelt es sich vorzugsweise um die Leitfähigkeit der Betriebsflüssigkeit. Wenn der Betriebsflüssigkeitsbehälter als Wasserbehälter zur Aufnahme von Wasser ausgebildet ist, das zur Injektion in eine Verbrennungskraftmaschine vorgesehen ist, ist die vorgegebene Qualitätsanforderung beispielsweise die Leitfähigkeit des Wassers und beträgt zwischen 1 µS/cm und 50 µS/cm.

Vorzugsweise ist das Verfahren derart ausgebildet, dass dieses einen Verfahrensschritt J1 des Ausgebens eines Freigabesignals aufweist, wenn die relative Abweichung der zweiten Kapazität von der ersten Kapazität größer als die erste Mindestabweichung ist.

Durch Ausgabe eines Freigabesignals kann insbesondere einer Steuerungseinrichtung des Kraftfahrzeugs signalisiert werden, dass die im Betriebsflüssigkeitsbehälterinnenraum befindliche Betriebsflüssigkeit einer vorgegebenen Qualitätsanforderung entspricht, so dass ein Betrieb des Kraftfahrzeugs ermöglicht ist.

Vorzugsweise ist das Verfahren derart ausgebildet, dass dieses einen Verfahrensschritt K des Ausgebens eines Warnsignals aufweist, wenn die relative Abweichung der zweiten Kapazität von der ersten Kapazität einen Wert zwischen der ersten Mindestabweichung und einer zweiten Mindestabweichung beträgt, wobei die zweite Mindestabweichung kleiner als die erste Mindestabweichung ist.

Wenn die relative Abweichung der zweiten Kapazität von der ersten Kapazität kleiner als die erste Mindestabweichung aber größer als die zweite Mindestabweichung ist, dann weist die im Betriebsflüssigkeitsbehälterinnenraum befindliche Betriebsflüssigkeit eine Qualität auf, die noch ausreichend ist. Jedoch wird ein Warnsignal ausgegeben, so dass ein Benutzer des Kraftfahrzeugs, in dem der Betriebsflüssigkeitsbehälter verbaut ist, darauf hingewiesen werden kann, dass die Qualität der im Betriebsflüssigkeitsbehälterinnenraum befindliche Betriebsflüssigkeit eine verminderte Qualität aufweist, die jedoch für den Betrieb des Kraftfahrzeugs noch ausreichend ist.

Vorzugsweise ist das Verfahren derart ausgebildet, dass dieses einen Verfahrensschritt K des Ausgebens eines Stoppsignals aufweist, wenn die relative Abweichung der zweiten Kapazität von der ersten Kapazität kleiner als eine zweite Mindestabweichung ist, wobei die zweite Mindestabweichung kleiner als die erste Mindestabweichung ist.

In diesem Fall weist die im Betriebsflüssigkeitsbehälterinnenraum befindliche Betriebsflüssigkeit eine Qualität auf, die für den Betrieb des Kraftfahrzeugs nicht ausreichend ist und eine Beschädigung des Kraftfahrzeugs bzw. von Einbauten des Kraftfahrzeugs, z.B. einer Wasserinjektionseinrichtung oder einer Verbrennungskraftmaschine, verursachen könnte. Somit kann durch Ausgabe des Stoppsignals ein Betrieb des Kraftfahrzeugs verhindert werden.

Selbstverständlich ist es auch möglich, eines der Verfahren nach einem der Ansprüche 1 bis 4 mit einem Verfahren nach einem der Ansprüche 5 bis 8 miteinander zu kombinieren.

Ferner liegt der vorliegenden Erfindung die Aufgabe zugrunde, einen Betriebsflüssigkeitsbehälter bereitzustellen, der zum Bestimmen einer elektrischen Leitfähigkeit einer in diesem befindlichen Betriebsflüssigkeit ausgebildet ist.

Dieser Aufgabe wird durch einen Betriebsflüssigkeitsbehälter mit den Merkmalen des Anspruchs 5 gelöst. Vorteilhafte Ausgestaltungen des Betriebsflüssigkeitsbehälters sind in den von Anspruch 5 abhängigen Ansprüchen beschrieben.

Im Genaueren wird die der vorliegenden Erfindung zugrundeliegende Aufgabe durch einen Betriebsflüssigkeitsbehälter gelöst, dessen Betriebsflüssigkeitsbehälterinnenraum von einer Deckenwand, einer Bodenwand und einer die Bodenwand mit der Deckenwand verbindenden Seitenwand begrenzt ist. Der Betriebsflüssigkeitsbehälter weist zumindest einen an einer Behälterwand des Betriebsflüssigkeitsbehälters befestigten Kondensator mit einer ersten Elektrode und einer zweiten Elektrode auf. Ferner weist der Betriebsflüssigkeitsbehälter eine elektronische Auswerteeinrichtung auf, die mit der ersten Elektrode und mit der zweiten Elektrode elektrisch verbunden ist. Der erfindungsgemäße Betriebsflüssigkeitsbehälter ist dadurch gekennzeichnet, dass die Auswerteeinrichtung dazu ausgebildet ist, zumindest eines der oben beschriebenen Verfahren gemäß einer der Ansprüchen 1 bis 4 auszuführen.

Der zumindest eine Kondensator ist vorzugsweise an oder in einer Seitenwand des Betriebsflüssigkeitsbehälters angebracht. Weiter vorzugsweise ist der zumindest eine Kondensator derart an der Seitenwand oder in der Seitenwand angeordnet, dass die erste Elektrode und die zweite Elektrode, die jeweils eine Längserstreckung, eine Breitenerstreckung und eine Tiefenerstreckung aufweisen, jeweils derart parallel zur Seitenwand verlaufen, dass die Längserstreckungen der ersten Elektrode und der zweiten Elektrode von der Bodenwand in Richtung der Deckenwand verlaufen.

Gemäß einer weiteren Ausgestaltung des Betriebsflüssigkeitsbehälters ist der zumindest eine Kondensator an der Bodenwand oder in der Bodenwand angeordnet, so dass die erste Elektrode und die zweite Elektrode jeweils parallel zur Bodenwand verlaufen.

Der zumindest eine Kondensator kann an einer Außenseite der Behälterwand angeordnet und mit dieser verbunden sein. Ferner ist es auch möglich, dass der zumindest eine Kondensator in der Behälterwand integriert bzw. eingebettet ist. Dabei sind die jeweiligen ersten und zweiten Elektroden des Kondensators von der Behälterwand umschlossen.

Der Betriebsflüssigkeitsbehälter ist vorzugsweise derart ausgebildet, dass der zumindest eine Kondensator in der Behälterwand eingebettet ist.

Bei einer Einbettung der Elektrode des Kondensators in die Behälterwand sind die Elektroden von der Behälterwand umschlossen, so dass lediglich noch elektrische Anschlüsse der Elektroden aus der Behälterwand herausragen.

Der entsprechend ausgebildete Betriebsflüssigkeitsbehälter weist den Vorteil auf, dass aufgrund der Einbettung des zumindest einen Kondensators in die Behälterwand des Betriebsflüssigkeitsbehälters die erste Elektrode und die zweite Elektrode des zumindest einen Kondensators einen verminderten Abstand zum Betriebsflüssigkeitsbehälterinnenraum und somit zu der im Betriebsflüssigkeitsbehälterinnenraum befindlichen Betriebsflüssigkeit aufweisen. Daher wechselwirkt ein zwischen der ersten Elektrode und der zweiten Elektrode des Kondensators befindliches elektrisches Feld weniger mit dem Material der Behälterwand und mehr mit der im Betriebsflüssigkeitsbehälterinnenraum befindlichen Betriebsflüssigkeit. Somit lässt sich die elektrische Leitfähigkeit der Betriebsflüssigkeit im Betriebsflüssigkeitsbehälterinnenraum mit einer erhöhten Genauigkeit bestimmen.

Ein weiterer Vorteil der Einbettung des zumindest einen Kondensators in die Behälterwand ist, dass sowohl der zumindest eine Kondensator mechanisch und chemisch geschützt ist, so dass der erfindungsgemäße Betriebsflüssigkeitsbehälter eine erhöhte Langzeitstabilität aufweist.

Der Betriebsflüssigkeitsbehälter ist insbesondere als Betriebsflüssigkeitsbehälter für ein Kraftfahrzeug ausgebildet.

Vorzugsweise ist der Betriebsflüssigkeitsbehälter derart ausgebildet, dass die Bodenwand eine sich in den Betriebsflüssigkeitsbehälterinnenraum erstreckende Erhebung aufweist, wobei die erste Elektrode und die zweite Elektrode des Kondensators in der Erhebung eingebettet sind.

Durch eine entsprechende Ausbildung des Betriebsflüssigkeitsbehälters ist die Bestimmung der elektrischen Leitfähigkeit der Betriebsflüssigkeit mit einer nochmals erhöhten Genauigkeit ermöglicht, da eventuelle Ablagerungen im Bereich der Bodenwand einen verminderten Einfluss auf die Bestimmung der elektrischen Leitfähigkeit der sich im Betriebsflüssigkeitsbehälterinnenraum befindlichen Betriebsflüssigkeit haben.

Die Erhebung der Bodenwand ist vorzugsweise als Einstülpung in den Betriebsflüssigkeitsbehälterinnenraum ausgebildet.

Die Erhebung ist vorzugsweise zwischen 2mm und 5mm von der umgebenden Innenfläche der Bodenwand abgehoben.

Vorzugsweise ist der Betriebsflüssigkeitsbehälter derart ausgebildet, dass die Behälterwand eine Außenschicht, eine dem Betriebsflüssigkeitsbehälterinnenraum zugewandte Innenschicht und eine zwischen diese angeordnete Haftschicht aufweist, wobei die erste Elektrode und die zweite Elektrode des zumindest einen Kondensators zwischen der Außenschicht und der Haftschicht angeordnet sind.

Folglich ist der zumindest eine Kondensator zwischen der Außenschicht und der Haftschicht angeordnet. Die Innenschicht ist folglich mit der Betriebsflüssigkeit in direkten Kontakt bringbar.

Eine entsprechende Ausbildung des Betriebsflüssigkeitsbehälters ermöglicht einen vereinfachten Aufbau und eine vereinfachte Integration des Kondensators in die Behälterwand des Betriebsflüssigkeitsbehälters.

Vorzugsweise ist der Betriebsflüssigkeitsbehälter derart ausgebildet, dass die Behälterwand eine Abschirmschicht und eine Isolationsschicht aufweist, wobei die Abschirmschicht zwischen der Außenschicht und der ersten und zweiten Elektroden angeordnet ist, und wobei die Isolationsschicht zwischen der Abschirmschicht und den ersten und zweiten Elektroden angeordnet ist.

Der entsprechend ausgebildete Betriebsflüssigkeitsbehälter weist den Vorteil auf, dass dieser eine nochmals erhöhte Genauigkeit hinsichtlich der Bestimmung der elektrischen Leitfähigkeit der im Betriebsflüssigkeitsbehälterinnenraum befindlichen Betriebsflüssigkeit aufweist. Denn die Abschirmschicht, die vorzugsweise als eine Metallschicht ausgebildet ist, schirmt die Elektroden des zumindest einen Kondensators vor Störfeldern ab.

Die Abschirmschicht ist folglich zwischen der Außenschicht und dem Referenzkondensator bzw. dem Kondensator angeordnet.

Die Abschirmschicht steht vorzugsweise mit der Außenschicht in Kontakt.

Die Isolationsschicht ist folglich sandwichartig zwischen der Abschirmschicht und dem Kondensator angeordnet.

Die Abschirmschicht weist ein Metall auf, so dass der zumindest eine Kondensator vor elektrische Störfeldern geschützt ist.

Die Isolationsschicht ist aus einem dielektrischen Material, vorzugsweise einem Kunststoff gefertigt, so dass die ersten und zweiten Elektroden des zumindest einen Kondensators nicht mit der Abschirmschicht in elektrischem Kontakt stehen.

Vorzugsweise ist der Betriebsflüssigkeitsbehälter derart ausgebildet, dass die Isolationsschicht die gleiche dielektrische Leitfähigkeit wie die Innenschicht und/oder die Außenschicht aufweist.

Der entsprechend ausgebildete Betriebsflüssigkeitsbehälter weist den Vorteil auf, dass dieser eine nochmals erhöhte Genauigkeit hinsichtlich der Bestimmung der elektrischen Leitfähigkeit der im Betriebsflüssigkeitsbehälterinnenraum befindlichen Betriebsflüssigkeit aufweist.

Vorzugsweise ist der Betriebsflüssigkeitsbehälter derart ausgebildet, dass ein Abstand der ersten und zweiten Elektroden zu dem Betriebsflüssigkeitsbehälterinnenraum zwischen 1,5 mm und 3,5 mm beträgt.

Der entsprechend ausgebildete Betriebsflüssigkeitsbehälter weist den Vorteil auf, dass dieser eine nochmals erhöhte Genauigkeit hinsichtlich der Bestimmung der elektrischen Leitfähigkeit der im Betriebsflüssigkeitsbehälterinnenraum befindlichen Betriebsflüssigkeit aufweist, denn der Abstand der entsprechenden Elektroden zu der sich im Betriebsflüssigkeitsbehälterinnenraum befindlichen Betriebsflüssigkeit ist reduziert.

Vorzugsweise weist die Innenschicht folglich eine Dicke von 1,5 mm bis 3,5 mm auf.

Folglich weist der zumindest eine Kondensator zum Betriebsflüssigkeitsbehälterinnenraum einen Abstand von lediglich 1,5 mm bis 3,5 mm auf.

Vorzugsweise ist der Betriebsflüssigkeitsbehälter derart ausgebildet, dass zumindest eine der ersten und zweiten Elektroden des Kondensators entlang ihrer Längserstreckung eine ungleichmäßige Breitenerstreckung aufweist.

Umso breiter die Elektroden sind, desto tiefer dringt das elektrische Feld in den Betriebsflüssigkeitsbehälterinnenraum und in die sich in diesem befindliche Betriebsflüssigkeit ein, so dass die Betriebsflüssigkeit einen größeren Einfluss auf die Bestimmung der elektrischen Leitfähigkeit der Betriebsflüssigkeit hat.

Vorzugsweise ist der Betriebsflüssigkeitsbehälter derart ausgebildet, dass zumindest einer der ersten und zweiten Elektroden des Kondensators entlang ihrer Längserstreckung eine sich in Richtung der Bodenwand vergrößernde Breitenerstreckung aufweist.

Der entsprechend ausgebildete Betriebsflüssigkeitsbehälter weist den Vorteil auf, dass die Messgenauigkeit der elektrischen Leitfähigkeit mittels des Kondensators im Bodenbereich des Betriebsflüssigkeitsbehälters erhöht ist.

Weitere Vorteile, Einzelheiten und Merkmale der Erfindung ergeben sich nachfolgend aus den erläuterten Ausführungsbeispielen. Dabei zeigen im Einzelnen:

Figur 1: ein Flussablaufdiagramm eines Verfahrens zum Bestimmen einer Qualitätseigenschaft einer Betriebsflüssigkeit gemäß einer ersten Ausführungsform der vorliegenden Erfindung, wobei die Qualitätseigenschaft eine elektrische Leitfähigkeit der Betriebsflüssigkeit ist;

Figur 2: frequenzabhängige Phasenverläufe der Impedanz eines Kondensators für drei unterschiedliche Betriebsflüssigkeiten, die jeweils unterschiedliche elektrische Leitfähigkeiten aufweisen;

Figur 3: ein Flussablaufdiagramm eines Verfahrens zum Bestimmen einer Qualitätseigenschaft einer Betriebsflüssigkeit gemäß einer zweiten Ausführungsform, das nicht

Teil der Erfindung ist, wobei die Qualitätseigenschaft eine elektrische Leitfähigkeit der Betriebsflüssigkeit ist;

Figur 4: frequenzabhängige Kapazitätsverläufe eines Kondensators für drei unterschiedliche Betriebsflüssigkeiten, die jeweils unterschiedliche elektrische Leitfähigkeiten aufweisen;

Figur 5: eine stark vereinfachte räumliche Darstellung eines erfindungsgemäßen Betriebsflüssigkeitsbehälters;

Figur 6: eine stark vereinfachte Darstellung einer Schichtstruktur der Bodenwand und/oder der Seitenwand des Betriebsflüssigkeitsbehälters gemäß einer weiteren Ausführungsform der vorliegenden Erfindung; und

Figuren 7A bis 7C:    Beispiele von Messkondensatoren in Alleinstellung in seitlicher Draufsicht von Betriebsflüssigkeitsbehältern unterschiedlicher Ausführungsformen der vorliegenden Erfindung.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

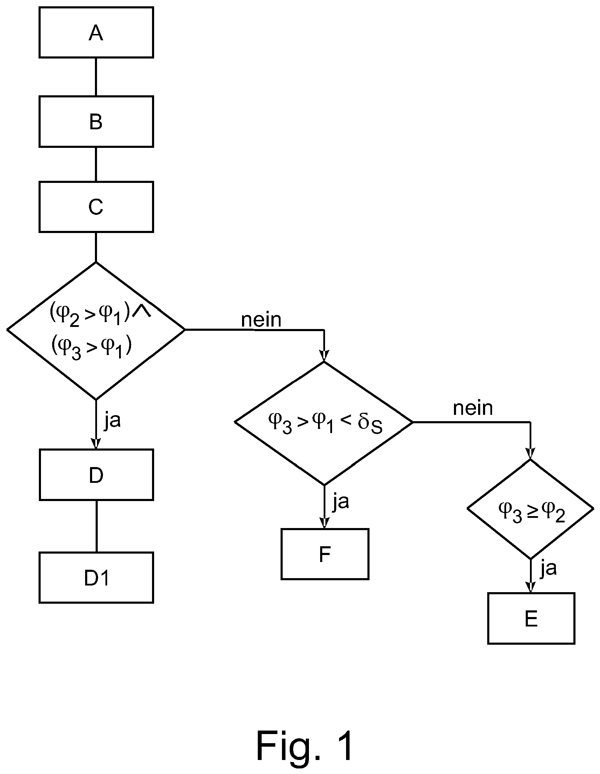

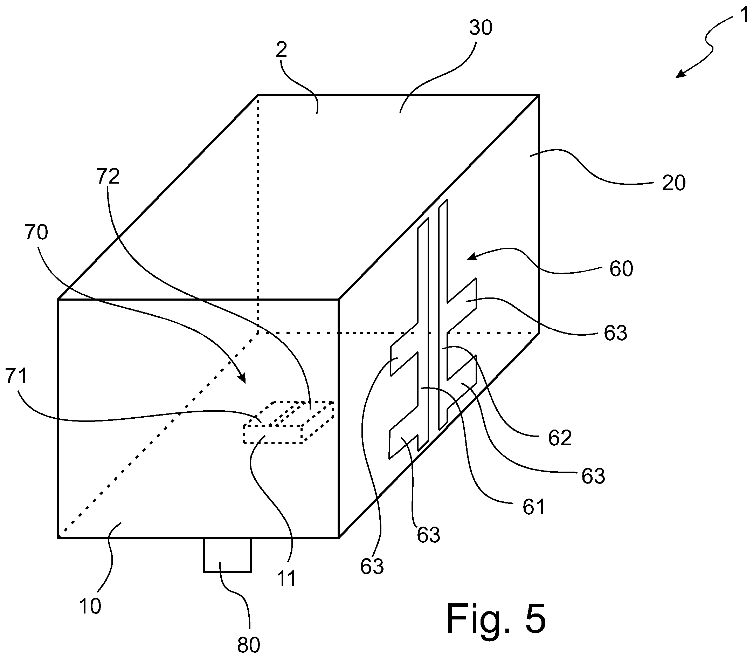

Figur 1 zeigt ein Flussablaufdiagramm eines Verfahrens zum Bestimmen einer Qualitätseigenschaft einer Betriebsflüssigkeit gemäß einer ersten Ausführungsform der vorliegenden Erfindung, wobei die Qualitätseigenschaft eine elektrische Leitfähigkeit der Betriebsflüssigkeit ist. Das Verfahren gemäß des in Figur 1 dargestellten Flussablaufdiagramms wird von einem in Figur 5 dargestellten Betriebsflüssigkeitsbehälter 1 ausgeführt.

Figur 5 zeigt eine stark vereinfachte räumliche Darstellung eines erfindungsgemäßen Betriebsflüssigkeitsbehälters 1. Ein Betriebsflüssigkeitsbehälterinnenraum 2 ist durch eine Deckenwand 30, eine Bodenwand 10 und eine die Bodenwand 10 mit der Deckenwand 30 verbindende Seitenwand 20 begrenzt. Aus Figur 5 ist ersichtlich, dass die Seitenwand 20 umlaufend ausgebildet ist.

Der in Figur 5 dargestellte Betriebsflüssigkeitsbehälter 1 weist einen ersten Kondensator 60 und einen zweiten Kondensator 70 auf. Gemäß der vorliegenden Erfindung kann der Betriebsflüssigkeitsbehälter 1 jedoch auch lediglich den ersten Kondensator 60 oder lediglich den zweiten Kondensator 70 aufweisen. Ferner kann der Betriebsflüssigkeitsbehälter 1 auch weitere Kondensatoren aufweisen, die in Figur 5 nicht dargestellt sind.

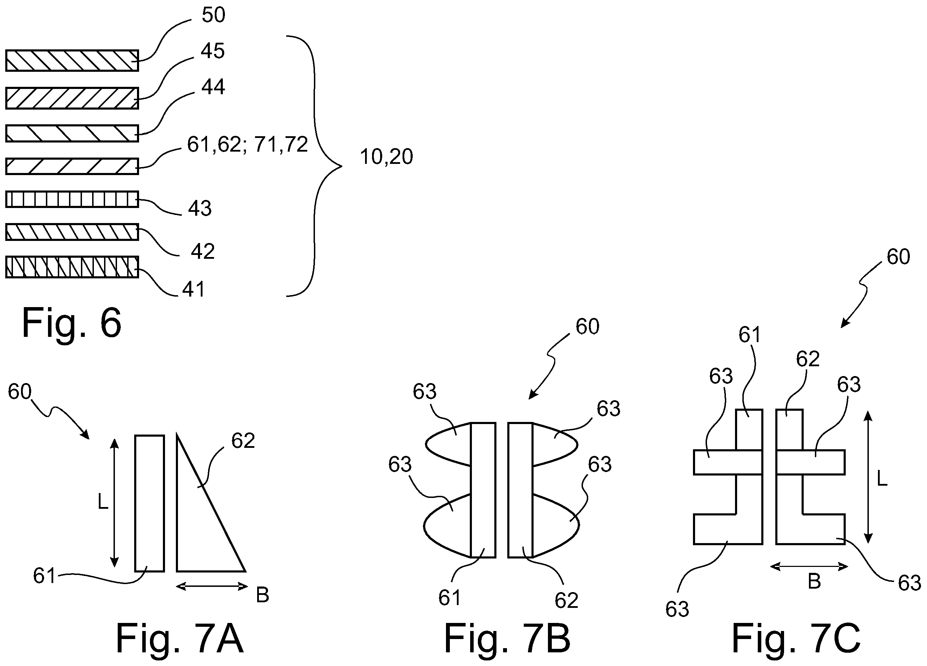

Der erste Kondensator 60 weist eine erste Elektrode 61 und eine zweite Elektrode 62 auf. Sowohl die erste Elektrode 61 als auch die zweite Elektrode 62 weisen jeweils eine Längserstreckung L, eine Breitenerstreckung B und eine Tiefenerstreckung auf (siehe Figuren 7A bis 7C). Die erste Elektrode 61 und die zweite Elektrode 62 sind dabei jeweils derart parallel zur Seitenwand 20 verlaufend angeordnet, dass die Längserstreckungen L der ersten Elektrode 61 und der zweiten Elektrode 62 von der Bodenwand 10 in Richtung der Deckenwand 30 verlaufen. Dabei sind Tiefenerstreckungen der erste Elektrode 61 und der zweiten Elektrode 62 einander gegenüberliegend angeordnet.

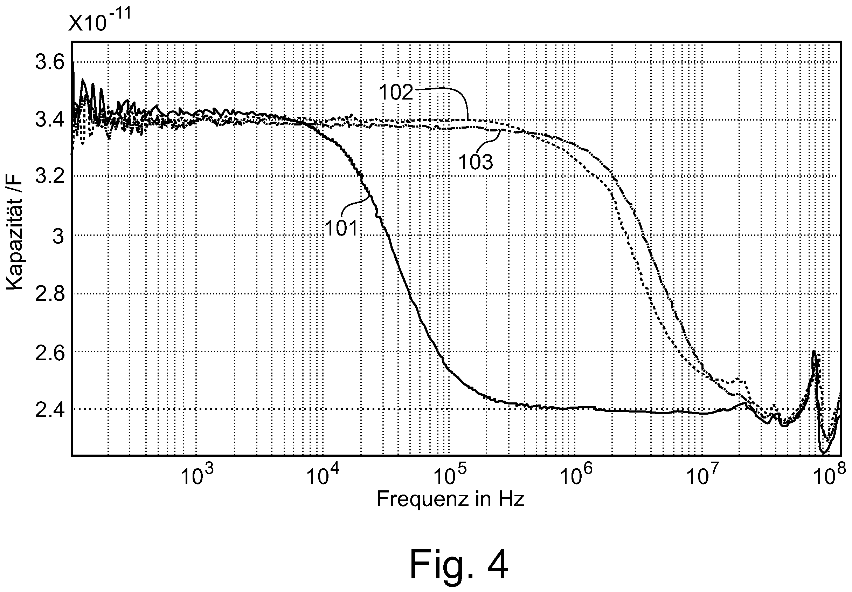

Der erste Kondensator 60 ist in die Seitenwand 20 eingebettet, so dass die erste Elektrode 61 und die zweite Elektrode 62 des ersten Kondensators 60 in der Seitenwand 20 eingebettet sind. Daher ist der erste Kondensator 60 von der Seitenwand 20 umschlossen. Folglich stehen die erste Elektrode 61 und die zweite Elektrode 62 des ersten Kondensators 60 nicht mit einer Betriebsflüssigkeit 50 (siehe Figur 6) in direktem Kontakt. Ferner stehen die erste Elektrode 61 und die zweite Elektrode 62 des ersten Kondensators 60 auch nicht mit der Umgebung des Betriebsflüssigkeitsbehälters 1 in direktem Kontakt. Hinsichtlich der Einbettung des ersten Kondensators 60 in die Seitenwand 20 wird auf Figur 4 verwiesen, die weiter unten beschrieben wird.

Die vorliegende Erfindung ist jedoch nicht darauf beschränkt, dass der erste Kondensator 60 in der Seitenwand 20 eingebettet ist. Bei einem erfindungsgemäßen Betriebsflüssigkeitsbehälter 1 kann der erste Kondensator 60 auch auf einer Außenfläche der Seitenwand 20 befestigt sein.

Aus Figur 5 ist ersichtlich, dass die erste Elektrode 61 und die zweite Elektrode 62 des ersten Kondensators 60 jeweils zwei Flügel 63 aufweisen, die parallel zur Breitenerstreckung B der Elektroden 61, 62 verlaufen. Die jeweiligen Flügel 63 sind dabei in unterschiedlichen Höhen der ersten und zweiten Elektroden 61, 62 ausgebildet, sodass die Flügel 63 in unterschiedlichen Höhen des Betriebsflüssigkeitsbehälters 1 angeordnet sind. Somit weisen die ersten und zweiten Elektroden 61, 62 des ersten Kondensators 60 entlang ihrer Längserstreckung L eine ungleichmäßige Breitenerstreckung B auf. Die vorliegende Erfindung ist jedoch nicht auf eine entsprechende Ausgestaltung der ersten und zweiten Elektroden 61, 62 des ersten Kondensators 60 beschränkt. Beispielsweise können die ersten und zweiten Elektroden 61, 62 des ersten Kondensators 60 über ihrer Längserstreckungen L auch eine gleichmäßige Breitenerstreckung B aufweisen.

Der zweite Kondensator 70 weist eine erste Elektrode 71 und eine zweite Elektrode 72 auf. Die erste Elektrode 71 und die zweite Elektrode 72 verlaufen parallel zur Bodenwand 10. Die erste Elektrode 71 und die zweite Elektrode 72 sind dabei jeweils derart parallel zur Bodenwand 10 verlaufend angeordnet, dass die Längserstreckungen und die Breitenersteckungen der ersten Elektrode 71 und der zweiten Elektrode 72 in der Ebene der Bodenwand 10 verlaufen, so dass die Tiefenerstreckungen der ersten Elektrode 71 und der zweiten Elektrode 72 einander gegenüberliegend angeordnet sind.

Wie aus Figur 5 ersichtlich ist, weist die Bodenwand 10 eine sich in den Betriebsflüssigkeitsbehälterinnenraum 2 erstreckende Erhebung 11 auf. Der zweite Kondensator 70 ist in der Bodenwand 10 derart eingebettet, dass die erste Elektrode 71 und die zweite Elektrode 72 des zweiten Kondensators 70 in der Erhebung 11 der Bodenwand 10 eingebettet sind. Folglich stehen die erste Elektrode 71 und die zweite Elektrode 72 des zweiten Kondensators 70 nicht mit der Betriebsflüssigkeit 50 in direktem Kontakt. Ferner stehen die erste Elektrode 71 und die zweite Elektrode 72 des zweite Kondensators 70 auch nicht mit der Umgebung des Betriebsflüssigkeitsbehälters 1 in direktem Kontakt. Durch die Einbettung der ersten Elektrode 71 und der zweiten Elektrode 72 in der Erhebung 11 der Bodenwand 10 wirken sich eventuelle Ablagerungen auf der Bodenwand 10 vermindert auf die Bestimmung der elektrischen Leitfähigkeit der sich im Betriebsflüssigkeitsbehälterinnenraum 2 befindlichen Betriebsflüssigkeit 50 aus.

Hinsichtlich der Einbettung des zweite Kondensators 70 in die Bodenwand 10 bzw. in die Erhebung 11 der Bodenwand 10 wird auf Figur 6 verwiesen, die weiter unten beschrieben wird.

Die vorliegende Erfindung ist jedoch nicht darauf beschränkt, dass der zweite Kondensator 70 in der Bodenwand 10 eingebettet ist. Bei einem erfindungsgemäßen Betriebsflüssigkeitsbehälter 1 kann der zweite Kondensator 70 auch auf einer Außenfläche der Bodenwand 10 befestigt sein.

Der Betriebsflüssigkeitsbehälter 1 weist ferner eine elektronische Auswerteeinrichtung 80 auf, die mit dem ersten Kondensator 60 und dem zweiten Kondensator 70 elektrisch verbunden ist. Die elektrische Verbindung der Auswerteeinrichtung 80 mit dem ersten Kondensator 60 und dem zweiten Kondensator 70 erfolgt über in Figur 5 nicht dargestellte elektrische Leitungen.

Die Auswerteeinrichtung 80 ist dazu ausgebildet, das Verfahren gemäß dem in Figur 1 dargestellten Flussablaufdiagramm auszuführen, das im Folgenden beschrieben wird.

In einem Verfahrensschritt A werden zumindest drei unterschiedliche Wechselspannungen mit unterschiedlichen Frequenzen an den ersten Kondensator 60 und/oder an den zweiten Kondensator 70 angelegt. Dabei entspricht eine erste Frequenz einer ersten Wechselspannung einer unteren Grenzfrequenz fmin von 10 kHz. Eine zweite Frequenz einer zweiten Wechselspannung entspricht einer Frequenz zwischen der unteren Grenzfrequenz fmin und einer oberen Grenzfrequenz fmax, wobei die obere Grenzfrequenz beispielsweise 100 kHz beträgt. Eine dritte Frequenz einer dritten Wechselspannung entspricht der oberen Grenzfrequenz fmax.

In einem Verfahrensschritt B werden eine erste Impedanz des ersten Kondensators 60 und/oder des zweiten Kondensators 70 für die erste Frequenz, eine zweiten Impedanz des ersten Kondensators 60 und/oder des zweiten Kondensators 70 für die zweite Frequenz und eine dritte Impedanz des ersten Kondensators 60 und/oder des zweiten Kondensators 70 für die dritte Frequenz bestimmt und jeweils gespeichert.

Anschließend werden in einem Verfahrensschritt C ein erster Phasenwinkel φ1 aus der ersten Impedanz, ein zweiter Phasenwinkel φ2 aus der zweiten Impedanz und ein dritter Phasenwinkel φ3 aus der dritten Impedanz bestimmt.

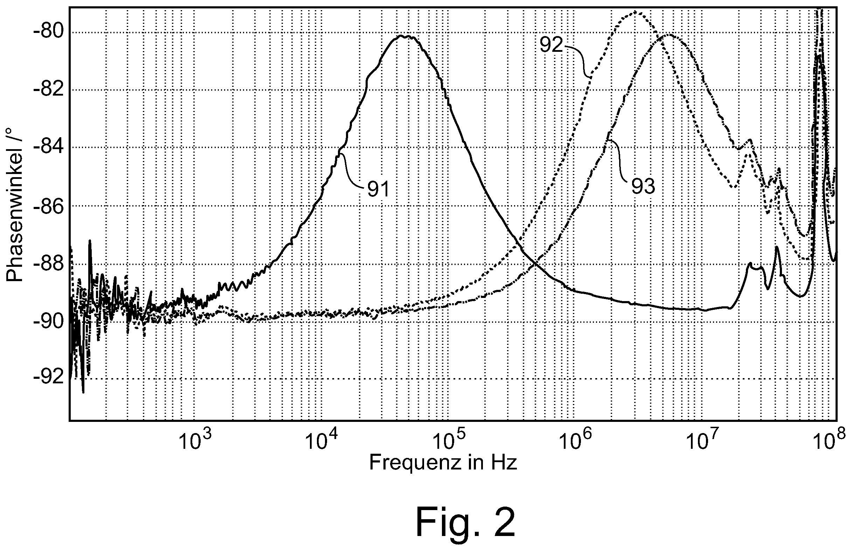

In Figur 2 sind drei unterschiedliche frequenzabhängige Phasenverläufe von Impedanzen des ersten Kondensators 60 und/oder des zweiten Kondensators 70 für drei unterschiedliche Betriebsflüssigkeiten dargestellt. Dabei zeigt der Verlauf 91 einen Phasenverlauf der Impedanz für deionisiertes Wasser. Der Verlauf 92 zeigt den frequenzabhängigen Verlauf des Phasenwinkels der Impedanz für eine Mischung aus 50 % deionisiertem Wasser und 50 % Leitungswasser, und der Verlauf 93 zeigt den frequenzabhängigen Verlauf des Phasenwinkels der Impedanz für Leitungswasser. Das deionisierte Wasser weist eine elektrische Leitfähigkeit zwischen 1-50 μS/cm auf. Die Mischung aus 50% deionisiertem Wasser und 50% Leitungswasser weist eine elektrische Leitfähigkeit zwischen 50-200 μS/cm auf. Das Leitungswasser weist eine elektrische Leitfähigkeit von über 200 μS/cm auf.

Aus Figur 2 ist ersichtlich, dass der Verlauf 91 des Phasenwinkels der Impedanz des Kondensators 60, 70 bei deionisiertem Wasser zwischen einer unteren Grenzfrequenz fmin von 10 kHz und einer oberen Grenzfrequenz fmax von 100 kHz ein Maximum aufweist. Demgegenüber ist aus Figur 2 ferner ersichtlich, dass der Verlauf 92 des Phasenwinkels der Impedanz des Kondensators 60, 70 für die Mischung aus deionisiertem Wasser und Leitungswasser zwischen der unteren Grenzfrequenz fmin und der oberen Grenzfrequenz fmax stetig ansteigt. Selbiges gilt für den Verlauf 93 des Phasenwinkels der Impedanz des Kondensators 60, 70 für reines Leitungswasser. Dabei ist ersichtlich, dass bei der oberen Grenzfrequenz fmax von 100 kHz der Verlauf 93 langsamer ansteigt als der Verlauf 92.

Zurückkommend zu dem Verfahren gemäß dem in Figur 1 dargestellten Flussablaufdiagramm wird nach dem Verfahrensschritt C überprüft, ob der zweite Phasenwinkel φ2 größer als der erste Phasenwinkel φ1 und auch größer als der dritte Phasenwinkel φ3 ist. Wenn diese Bedingung erfüllt ist, dann weist der Verlauf des Phasenwinkels zwischen der unteren Grenzfrequenz fmin und der oberen Grenzfrequenz fmax ein Maximum auf. Wenn der Verlauf des Phasenwinkels ein Maximum aufweist, dann wird in einem Verfahrensschritt D bestimmt bzw. festgelegt, dass die im Betriebsflüssigkeitsbehälter 1 befindliche Betriebsflüssigkeit einer vorgegebenen Qualitätsanforderung genügt.

In dem beschriebenen Ausführungsbeispiel wird bei Ermitteln eines Maximums des Verlaufs des Phasenwinkels bestimmt, dass die elektrische Leitfähigkeit der im Betriebsflüssigkeitsbehälterinnenraum 2 befindlichen Betriebsflüssigkeit eine elektrische Leitfähigkeit zwischen 1-50 μS/cm aufweist. Daraus kann rückgeschlossen werden, dass das im Betriebsflüssigkeitsbehälterinnenraum 2 befindliche Wasser deionisiertes Wasser ist und für den Betrieb einer Wasserinjektionseinrichtung geeignet ist. In diesem Fall wird in einem Verfahrensschritt D1 ein Freigabesignal ausgegeben. Der Schritt D1 ist jedoch optional und nicht obligatorisch.

Wenn ermittelt wird, dass der zweite Phasenwinkel φ2 nicht größer als der dritte Phasenwinkel φ3 ist, wird überprüft, ob eine Differenz zwischen dem dritten Phasenwinkel φ3 und dem ersten Phasenwinkel φ1 kleiner als ein vorgegebener Minimalverlustwinkel δs ist. Der Minimalverlustwinkel δs in dem dargestellten Ausführungsbeispiel beträgt 1°. Aus dem in Figur 2 dargestellten frequenzabhängigen Verlauf 93 ist ersichtlich, dass der Verlustwinkel für die obere Grenzfrequenz fmax kleiner als 1° und somit kleiner als der Minimalverlustwinkel δs ist. Somit wird in einem Verfahrensschritt F ein Stoppsignal ausgegeben. Mittels des Stoppsignals kann einem in den Figuren nicht dargestellten Wassereinspritzsystem signalisiert werden, dass das im Betriebsflüssigkeitsbehälterinnenraum 2 befindliche Wasser für die Wasserinjektion nicht geeignet ist, da das Wasser eine elektrische Leitfähigkeit von mehr als 200 $\mu$S/cm aufweist. Folglich handelt es sich bei dem in den Betriebsflüssigkeitsbehälterinnenraum 2 befindliche Wasser um beispielsweise Leitungswasser.

Wenn die Differenz zwischen dem dritten Phasenwinkel $\varphi 3$ und dem ersten Phasenwinkel $\varphi 1$ nicht kleiner als der vorgegebene Minimalverlustwinkel $\delta s$ ist, wird überprüft, ob der dritte Phasenwinkel $\varphi 3$ größer als der zweite Phasenwinkel $\varphi 2$ ist. Wenn diese Bedingung erfüllt ist, dann wird darauf zurückgeschlossen, dass das im Betriebsflüssigkeitsbehälterinnenraum 2 befindliche Wasser eine elektrische Leitfähigkeit zwischen 50-200 $\mu$S/cm aufweist. Die Qualitätseigenschaften dieses Wasser sind für die Wasserinjektion noch ausreichend. Jedoch wird in einem Verfahrensschritt E ein Warnsignal ausgegeben, sodass der Nutzer des Kraftfahrzeugs, in dem der erfindungsgemäße Betriebsflüssigkeitsbehälter 1 verbaut ist, darauf aufmerksam gemacht werden kann, dass das im Betriebsflüssigkeitsbehälterinnenraum 2 befindliche Wasser zwar den Anforderungen genügt jedoch Verunreinigungen aufweist.

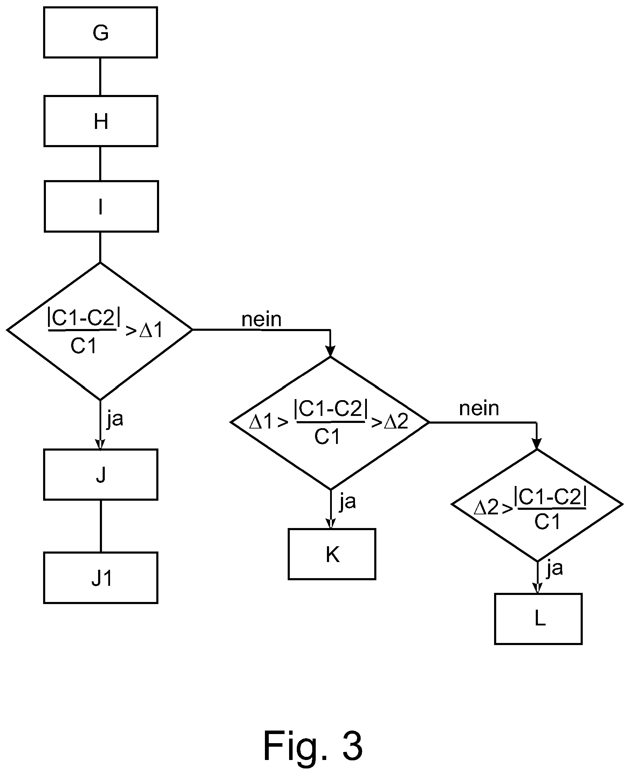

Die Auswerteeinrichtung 80 des in Figur 5 dargestellten Betriebsflüssigkeitsbehälters 1 ist ferner dazu ausgebildet, das Verfahren gemäß dem in Figur 3 dargestellten Flussablaufdiagramm auszuführen, das im Folgenden beschrieben wird.

In einem Verfahrensschritt G werden zumindest zwei unterschiedliche Wechselspannungen mit unterschiedlichen Frequenzen an den ersten Kondensator 60 und/oder an den zweiten Kondensator 70 angelegt. Dabei entspricht eine erste Frequenz einer ersten Wechselspannung einer unteren Grenzfrequenz fmin. Eine zweite Frequenz einer zweiten Wechselspannung entspricht einer oberen Grenzfrequenz fmax.

Anschließend werden in einem Verfahrensschritt H eine erste Kapazität C1 des ersten Kondensators und/oder des zweiten Kondensators 70 für die erste Frequenz bestimmt und gespeichert. Ferner wird im Verfahrensschritt H eine zweite Kapazität C2 des ersten Kondensators 60 und/oder des zweiten Kondensators des 70 für die zweite Frequenz bestimmt und gespeichert.

Anschließend wird in einem Verfahrensschritt I eine relative Abweichung der zweiten Kapazität C2 von der ersten Kapazität C1 ermittelt. Im Verfahrensschritt I wird folglich ermittelt, um wie viel Prozent die zweite Kapazität C2 von der ersten Kapazität C1 abweicht.

In Figur 4 sind drei unterschiedliche frequenzabhängige Kapazitätsverläufe des ersten Kondensators 60 und/oder des zweiten Kondensators 70 für drei unterschiedliche Betriebsflüssigkeiten dargestellt. Dabei zeigt der Verlauf 101 einen frequenzabhängigen Kapazitätsverlauf des ersten Kondensators 60 und/oder des zweiten Kondensators 70 für deionisiertes Wasser. Der Verlauf 102 zeigt den frequenzabhängigen Kapazitätsverlauf des ersten Kondensators 60 und/oder des zweiten Kondensators 70 für eine Mischung aus 50 % deionisiertem Wasser und 50 % Leitungswasser, und der Verlauf 103 zeigt den frequenzabhängigen Kapazitätsverlauf des ersten Kondensators 60 und/oder des zweiten Kondensators 70 für Leitungswasser. Das deionisierte Wasser weist eine elektrische Leitfähigkeit zwischen 1-50 $\mu$S/cm auf. Die Mischung aus 50% deionisiertem Wasser und 50% Leitungswasser weist eine elektrische Leitfähigkeit zwischen 50-200 $\mu$S/cm auf. Das Leitungswasser weist eine elektrische Leitfähigkeit von über 200 $\mu$S/cm auf.

Aus Figur 4 ist ersichtlich, dass der Verlauf 101 der frequenzabhängigen Kapazität des Kondensators 60, 70 bei deionisiertem Wasser als Betriebsflüssigkeit von der ersten Kapazität C1 auf die zweite Kapazität C2 abfällt. Dabei weist der Kondesator 60, 70 bei der unteren Grenzfrequenz fmin, die im dargestellten Ausführungsbeispiels 10 kHz beträgt, die erste Kapazität C1 von ca. 3,2 pF und bei der oberen Grenzfrequenz fmax, die im dargestellten Ausführungsbeispiels 1 MHz beträgt, die zweite Kapazität C2 von ca. 2,4 pF auf. Folglich beträgt die relative Abweichung von C1 zu C2 bei deionisiertem Wasser als Betriebsflüssigkeit ca. 25%.

Aus Figur 4 ist ferner ersichtlich, dass die frequenzabhängige Kapazität des Kondensators 60, 70 bei der Mischung aus 50% deionisiertem Wasser und 50% Leitungswasser als Betriebsflüssigkeit von der ersten Kapazität C1 auf die zweite Kapazität C2 abfällt. Dabei weist der Kondesator 60, 70 bei der unteren Grenzfrequenz fmin, die im dargestellten Ausführungsbeispiels 10 kHz beträgt, die erste Kapazität C1 von ca. 3,6 pF und bei der oberen Grenzfrequenz fmax, die im dargestellten Ausführungsbeispiels 1 MHz beträgt, die zweite Kapazität C2 von ca. 3,4 pF auf. Folglich beträgt die relative Abweichung von C1 zu C2 bei der Mischung aus 50% deionisiertem Wasser und 50% Leitungswasser als Betriebsflüssigkeit ca. 6%.

Aus Figur 4 ist weiterhin ersichtlich, dass die frequenzabhängige Kapazität des Kondensators 60, 70 bei Leitungswasser als Betriebsflüssigkeit von der ersten Kapazität C1 auf die zweite Kapazität C2 abfällt. Dabei weist der Kondesator 60, 70 bei der unteren Grenzfrequenz fmin, die im dargestellten Ausführungsbeispiels 10 kHz beträgt, die erste Kapazität C1 von ca. 3,4 pF und bei der oberen Grenzfrequenz fmax, die im dargestellten Ausführungsbeispiels 1 MHz beträgt, die zweite Kapazität C2 von ca. 3,35 pF auf. Folglich beträgt die relative Abweichung von C1 zu C2 bei Leitungswasser als Betriebsflüssigkeit ca. 1,5%.

Zurückkommend zu dem Verfahren gemäß dem in Figur 3 dargestellten Flussablaufdiagramm wird nach dem Verfahrensschritt I überprüft, ob die relative Abweichung der zweiten Kapazität C2 von der ersten Kapazität C1 größer als eine erste Mindestabweichung $\Delta 1$ ist. Im Genaueren wird bestimmt, ob folgende Bedingung erfüllt ist:

$$\frac{|C1 - C2|}{C1} > \Delta 1$$

Wenn diese Bedingung erfüllt ist, wird in einem Verfahrensschritt J bestimmt, dass die im Betriebsflüssigkeitsbehälter 1 befindliche Betriebsflüssigkeit einer vorgegebenen Qualitätsanforderung genügt, da die elektrische Leitfähigkeit der Betriebsflüssigkeit einen Wert zwischen 1 bis 50 µS/cm aufweist.

In dem beschriebenen Ausführungsbeispiel weist die Mindestabweichung $\Delta 1$ einen Wert von 0,2 aus. Somit wird für deionisiertes Wasser als Betriebsflüssigkeit im Verfahrensschritt J bestimmt, dass das deionisierte Wasser den vorgegebenen Qualitätsanforderungen genügt, da die relative Abweichung der zweiten Kapazität C2 von der ersten Kapazität C1 25% und somit 0,25 beträgt.

Anschließend wird in einem Verfahrensschritt J1 ein Freigabesignal ausgegeben, wenn die relative Abweichung der zweiten Kapazität C2 von der ersten Kapazität C1 größer als die erste Mindestabweichung $\Delta 1$. Der Verfahrensschritt J1 ist lediglich optional und nicht obligatorisch.

Wenn die Bedingung $\dfrac{|C1 - C2|}{C1} > \Delta 1$ hingegen nicht erfüllt ist, wird überprüft, ob folgende Bedingung erfüllt ist:

$$\Delta 1 > \frac{|C1 - C2|}{C1} > \Delta 2$$

Wenn diese Bedingung erfüllt ist, dann wird darauf zurückgeschlossen, dass das im Betriebsflüssigkeitsbehälterinnenraum 2 befindliche Wasser eine elektrische Leitfähigkeit zwischen 50-200 µS/cm aufweist. Die Qualitätseigenschaften dieses Wassers sind für die Wasserinjektion noch ausreichend. Jedoch wird in einem Verfahrensschritt K ein Warnsignal ausgegeben, sodass der Nutzer des Kraftfahrzeugs, in dem der Betriebsflüssigkeitsbehälter 1 verbaut ist, darauf aufmerksam gemacht werden kann, dass das im Betriebsflüssigkeitsbehälterinnenraum 2 befindliche Wasser zwar den Anforderungen genügt jedoch Verunreinigungen aufweist. Folglich wird im Verfahrensschritt K ein Warnsignal ausgegeben, wenn die relative Abweichung der zweiten Kapazität C2 von der ersten Kapazität C1 einen Wert zwischen der ersten Mindestabweichung $\Delta 1$ und einer zweiten Mindestabweichung $\Delta 2$ aufweist, wobei die zweite Mindestabwei- chung $\Delta 2$ kleiner als die erste Mindestabweichung $\Delta 1$ ist.

In dem beschriebenen Ausführungsbeispiel weist $\Delta 2$ einen Wert von 0,05 aus. Somit ist für eine Mischung aus 50% deionisiertem Wasser und 50% Leitungswasser als Betriebsflüssigkeit, bei der |C1-C2|/C1 einen Wert von 0,06 ergibt, die Bedingung 0,2 > 0,06 > 0,05 erfüllt, so dass im Verfahrensschritt K ein Warnsignal ausgegeben wird.

Wenn die Bedingung $\Delta 1 > \dfrac{|C1 - C2|}{C1} > \Delta 2$ hingegen nicht erfüllt ist, wird überprüft, ob folgende Bedingung erfüllt ist:

$$\Delta 2 > \frac{|C1 - C2|}{C1}$$

Wenn diese Bedingung erfüllt ist, dann wird darauf zurückgeschlossen, dass das im Betriebsflüssigkeitsbehälterinnenraum 2 befindliche Wasser eine elektrische Leitfähigkeit von mehr als 200 µS/cm aufweist. Die Qualitätseigenschaften dieses Wasser sind für die Wasserinjektion nicht ausreichend. Somit wird in einem Verfahrensschritt L ein Stoppsignal ausgegeben. Mittels des Stoppsignals kann einem in den Figuren nicht dargestellten Wassereinspritzsystem signalisiert werden, dass das im Betriebsflüssigkeitsbehälterinnenraum 2 befindliche Wasser für die Wasserinjektion nicht geeignet ist, da das Wasser eine elektrische Leitfähigkeit von mehr als 200 µS/cm aufweist. Folglich handelt es sich bei dem in den Betriebsflüssigkeitsbehälterinnenraum 2 befindliche Wasser um beispielsweise Leitungswasser.

Folglich wird im Verfahrensschritt L ein Stoppsignal ausgegeben, wenn die relative Abweichung der zweiten Kapazität C2 von der ersten Kapazität C1 kleiner als die zweite Mindestabweichung $\Delta 2$ ist.

In dem beschriebenen Ausführungsbeispiel weist $\Delta 2$ einen Wert von 0,05 aus. Somit ist für Leitungswasser als Betriebsflüssigkeit, bei der |C1-C2|/C1 einen Wert von 0,015 ergibt, die Bedingung 0,05 > 0,015 erfüllt, so dass im Verfahrensschritt L ein Stoppsignal ausgegeben wird.

Figur 6 zeigt eine stark vereinfachte Darstellung einer Schichtstruktur einer Behälterwand 10, 20, 30 des Betriebsflüssigkeitsbehälters 1. Bei der Behälterwand kann es sich um die Bodenwand 10 und/oder die Seitenwand 20 und/oder die Deckenwand 30 handeln. Es ist ersichtlich, dass die Behälterwand 10 mehrschichtig aufgebaut ist.

Im Folgenden wird die Schichtstruktur der Behälterwand 10, 20, 30 mit Bezug die Seitenwand 20 und mit Bezug auf den ersten Kondensator 60 beschrieben. Jedoch kann auch die Bodenwand 10 und/oder die Deckenwand 30 eine entsprechende Schichtstruktur aufweisen. Ferner kann auch der zweite Kondensator 70 auf die gleiche Art und Weise in der Behälterwand 10, 20, 30 eingebettet sein.

Es ist ersichtlich, dass die Seitenwand 20 eine Außenschicht 41, eine dem Betriebsflüssigkeitsbehälterinnenraum 2 zugewandte Innenschicht 45 und eine zwischen die Außenschicht 41 und die Innenschicht 45 angeordnete Haftschicht 44 aufweist. Die erste Elektrode 61 und die zweite Elektrode 62 des ersten Kondensators 60 sind zwischen der Außenschicht 41 und der Haftschicht 44 angeordnet. Die Seitenwand 20 weist ferner eine Abschirmschicht 42 und eine Isolationsschicht 43 auf, wobei die Abschirmschicht 42 zwischen der Außenschicht 41 und der ersten Elektroden 61 und der zweiten Elektrode 62 des ersten Kondensators 60 angeordnet ist. Die Isolationsschicht 43 wiederum ist zwischen der Abschirmschicht 42 und den ersten und zweiten Elektroden 61, 62 des ersten Kondensators 60 angeordnet.

Es ist ferner ersichtlich, dass die Seitenwand 20 eine Außenschicht 41, eine dem Betriebsflüssigkeitsbehälterinnenraum 2 zugewandte Innenschicht 45 und eine zwischen die Außenschicht 41 und die Innenschicht 45 angeordnete Haftschicht 44 aufweist. Die erste Elektrode 61 und die zweite Elektrode 62 des ersten Kondensators 60 sind zwischen der Außenschicht 41 und der Haftschicht 44 angeordnet. Die Seitenwand 20 weist ferner eine Abschirmschicht 42 und eine Isolationsschicht 43 auf, wobei die Abschirmschicht 42 zwischen der Außenschicht 41 und den ersten und zweiten Elektroden 61, 62 des ersten Kondensators 60 angeordnet ist. Die Isolationsschicht 43 wiederum ist zwischen der Abschirmschicht 42 und den ersten und zweiten Elektroden 61, 62 des ersten Kondensators 60 angeordnet.

Figur 7A zeigt einen ersten Kondensator 60 in Alleinstellung in seitlicher Draufsicht. Bei dem dargestellten Ausführungsbeispiel ist ersichtlich, dass die erste Elektrode 61 des ersten Kondensators 60 entlang ihrer Längenerstreckung L eine gleichmäßige Breitenerstreckung B aufweist. Die zweite Elektrode 62 des ersten Kondensators 60 hingegen weist eine sich entlang der Längenerstreckung der zweiten Elektrode 62 veränderte Breitenerstreckung B auf. Es ist ersichtlich, dass die Breite der zweiten Elektrode 62 entlang ihrer Längenerstreckung L eine sich in Richtung der Bodenwand 10 vergrößernde Breitenerstreckung B aufweist.

Figur 7B zeigt ein weiteres Beispiel eines ersten Kondensators 60 gemäß einer weiteren Ausführungsform des Betriebsflüssigkeitsbehälters 1. Es ist ersichtlich, dass sowohl die erste Elektrode 61 als auch die zweite Elektrode 62 jeweils in unterschiedlichen Höhen, d. h. in unterschiedlichen Positionen hinsichtlich der Längenerstreckung L der ersten und zweiten Elektroden 61, 62 jeweils zwei Flügel 63 aufweisen, die sich entlang der Breitenerstreckung B der ersten und zweiten Elektroden 61, 62 erstrecken. Es ist ersichtlich, dass die jeweiligen Flügel 63 abgerundet sind.

Figur 7C wiederum zeigt einen ersten Kondensator 60 eines Betriebsflüssigkeitsbehälters 1 gemäß einer weiteren Ausführungsform. Auch der in Figur 7C dargestellte ersten Kondensator 60 ist derart ausgebildet, dass sowohl die erste Elektrode 61 als auch die zweite Elektrode 62 jeweils zwei Flügel 63 aufweisen, die sich in der Breitenerstreckung B der jeweiligen Elektroden 61, 62 erstrecken. Die jeweiligen Flügel 63 sind dabei in unterschiedlichen Höhen der jeweiligen Elektroden 61, 62 angeordnet.

Die vorliegende Erfindung ist auf die in den Figuren 7A bis 7C dargestellten Ausgestaltungen des ersten Kondensators 60 jedoch nicht beschränkt, solange mittels des ersten Kondensators 60 ein elektrisches Feld erzeugt wird, dass sich in den Betriebsflüssigkeitsbehälterinnenraum 2 erstreckt, sodass die elektrische Leitfähigkeit der Betriebsflüssigkeit 50 mittels der Auswerteeinrichtung 80 ermittelt werden kann.

**Bezugszeichenliste**

| | |
|---|---|
| 1 | Betriebsflüssigkeitsbehälter |
| 2 | Betriebsflüssigkeitsbehälterinnenraum |
| 10 | Bodenwand (des Betriebsflüssigkeitsbehälters) |
| 11 | Erhebung (der Bodenwand) |
| 20 | Seitenwand (des Betriebsflüssigkeitsbehälters) |
| 30 | Deckenwand |
| 41 | Außenschicht (der Bodenwand / der Seitenwand) |
| 42 | Abschirmschicht (der Bodenwand / der Seitenwand) |
| 43 | Isolationsschicht (der Bodenwand / der Seitenwand) |
| 44 | Haftschicht (der Bodenwand / der Seitenwand) |
| 45 | Innenschicht (der Bodenwand / der Seitenwand) |
| 50 | Betriebsflüssigkeit |
| 60 | erster Kondensator |
| 61 | erste Elektrode (des ersten Kondensators) |

| 62 | zweite Elektrode (des ersten Kondensators) |
|---|---|
| 63 | Flügel (der ersten Elektrode und/oder der zweiten Elektrode) |
| 70 | zweiter Kondensator |
| 71 | erste Elektrode (des zweiten Kondensators) |
| 72 | zweite Elektrode (des zweiten Kondensators) |
| 80 | Auswerteeinrichtung |
| 91 | frequenzabhängiger Phasenverlauf für deionisiertes Wasser |
| 92 | frequenzabhängiger Phasenverlauf für eine Mischung aus 50% deionisiertem Wasser und 50% Leitungswasser |
| 93 | frequenzabhängiger Phasenverlauf für Leitungswasser |
| 101 | frequenzabhängiger Kapazitätsverlauf für deionisiertes Wasser |
| 102 | frequenzabhängiger Kapazitätsverlauf für eine Mischung aus 50% deionisiertem Wasser und 50% Leitungswasser |
| 103 | frequenzabhängiger Kapazitätsverlauf für Leitungswasser |
| L | Längserstreckung (der Elektroden des Messkondensators) |
| B | Breitenerstreckung (der Elektroden des Messkondensators) |
| C1 | erste Kapazität (des Kondensators) |
| C2 | zweite Kapazität (des Kondensators) |
| fmin | untere Grenzfrequenz |
| fmax | obere Grenzfrequenz |
| $\varphi 1$ | erster Phasenwinkel |
| $\varphi 2$ | zweiter Phasenwinkel |
| $\varphi 3$ | dritter Phasenwinkel |
| $\delta s$ | Minimalverlustwinkel |
| $\Delta 1$ | erste Mindestabweichung |
| $\Delta 2$ | zweite Mindestabweichung |

**Patentansprüche**

1. Verfahren zum Bestimmen einer elektrischen Leitfähigkeit einer Betriebsflüssigkeit in einem Betriebsflüssigkeitsbehälter (1) für ein Kraftfahrzeug, wobei die Betriebsflüssigkeit deionisiertes Wasser ist, wobei der Betriebsflüssigkeitsbehälter (1) zumindest einen an einer Behälterwand (10, 20, 30) des Betriebsflüssigkeitsbehälters (1) befestigten Kondensator (60, 70) mit einer ersten Elektrode (61, 71) und einer dieser gegenüberliegenden zweiten Elektrode (62, 72) aufweist, wobei das Verfahren durch folgende Verfahrensschritte **gekennzeichnet** ist:

   - Anlegen (A) von zumindest drei unterschiedlichen Wechselspannungen an den Kondensator (60, 70), wobei eine erste Frequenz einer ersten Wechselspannung einer unteren Grenzfrequenz (fmin) von 10 kHz, eine zweite Frequenz einer zweiten Wechselspannung einer Frequenz zwischen der unteren Grenzfrequenz (fmin) und einer oberen Grenzfrequenz (fmax) von 1 MHz oder 100 kHz und eine dritte Frequenz einer dritten Wechselspannung der oberen Grenzfrequenz (fmax) entspricht;
   - Bestimmen und Speichern (B) einer ersten Impedanz des Kondensators (60, 70) für die erste Frequenz, einer zweiten Impedanz des Kondensators (60, 70) für die zweite Frequenz und einer dritten Impedanz des Kondensators (60, 70) für die dritte Frequenz;
   - Bestimmen (C) eines ersten Phasenwinkels ($\varphi 1$) aus der ersten Impedanz, eines zweiten Phasenwinkels ($\varphi 2$) aus der zweiten Impedanz und eines dritten Phasenwinkels ($\varphi 3$) aus der dritten Impedanz; und
   - Bestimmen (D), dass eine im Betriebsflüssigkeitsbehälter (1) befindliche Betriebsflüssigkeit (50) einer Qualitätsanforderung einer elektrischen Leitfähigkeit zwischen 1 $\mu$S/cm und 50 $\mu$S/cm genügt, wenn der zweite Phasenwinkel ($\varphi 2$) größer als der erste Phasenwinkel ($\varphi 1$) und größer als der dritte ($\varphi 3$) Phasenwinkel ist.

2. Verfahren nach Anspruch 1, **gekennzeichnet durch** den Verfahrensschritt:

   - Ausgeben (D1) eines Freigabesignals, wenn der zweite Phasenwinkel ($\varphi 2$) größer als der erste Phasenwinkel ($\varphi 1$) und größer als der dritte ($\varphi 3$) Phasenwinkel ist.

3. Verfahren nach einem der vorhergehenden Ansprüche, **gekennzeichnet durch** den Verfahrensschritt:

   - Ausgeben (E) eines Warnsignals, wenn der dritte Phasenwinkel ($\varphi 3$) größer als der zweite Phasenwinkel ($\varphi 2$) oder gleich dem zweiten Phasenwinkel ($\varphi 2$) ist.

4. Verfahren nach einem der vorhergehenden Ansprüche, **gekennzeichnet durch** den Verfahrensschritt:

- Ausgeben (F) eines Stoppsignals, wenn eine Differenz zwischen dem dritten Phasenwinkel ($\varphi$3) und dem ersten Phasenwinkel ($\varphi$1) kleiner als ein vorgegebener Minimalverlustwinkel ($\delta$s) ist.

5. Betriebsflüssigkeitsbehälter (1) mit den folgenden Merkmalen:

- ein Betriebsflüssigkeitsbehälterinnenraum (2) ist von einer Deckenwand (30), einer Bodenwand (10) und einer die Bodenwand (10) mit der Deckenwand (30) verbindenden Seitenwand (20) begrenzt;
- der Betriebsflüssigkeitsbehälter (1) weist zumindest einen an einer Behälterwand (10, 20, 30) des Betriebsflüssigkeitsbehälters (1) befestigten Kondensator (60, 70) mit einer ersten Elektrode (61, 71) und einer zweiten Elektrode (62, 72) auf;
- der Betriebsflüssigkeitsbehälter (1) weist eine elektronische Auswerteeinrichtung (80) auf, die mit der ersten Elektrode (61, 71) und mit der zweiten Elektrode (62, 72) elektrisch verbunden ist,

wobei der Betriebsflüssigkeitsbehälter (1) **dadurch gekennzeichnet ist, dass** die Auswerteeinrichtung (80) dazu ausgebildet ist ein Verfahren nach zumindest einem der Ansprüche 1 bis 4 auszuführen.

6. Betriebsflüssigkeitsbehälter (1) nach Anspruch 5, **dadurch gekennzeichnet, dass** der Kondensator (60, 70) in der Behälterwand (10, 20, 30) eingebettet ist.

7. Betriebsflüssigkeitsbehälter (1) nach einem der Ansprüche 5 bis 6, **gekennzeichnet durch** die folgenden Merkmale:

- die Bodenwand (10) weist eine sich in den Betriebsflüssigkeitsbehälterinnenraum (2) erstreckende Erhebung (11) auf; und
- die erste Elektrode (71) und die zweite Elektrode (72) des Kondensators (70) sind in der Erhebung (11) eingebettet.

8. Betriebsflüssigkeitsbehälter (1) nach einem der Ansprüche 5 bis 7, **gekennzeichnet durch** die folgenden Merkmale:

- die Behälterwand (10, 20, 30) weist eine Außenschicht (41), eine dem Betriebsflüssigkeitsbehälterinnenraum (2) zugewandte Innenschicht (45) und eine zwischen diese angeordnete Haftschicht (44) auf;
- die erste Elektrode (61, 71) und die zweite Elektrode (62, 72) des zumindest einen Kondensators (60) sind zwischen der Außenschicht (41) und der Haftschicht (44) angeordnet.

9. Betriebsflüssigkeitsbehälter (1) nach einem der Ansprüche 5 bis 8, **gekennzeichnet durch** die folgenden Merkmale:

- die Behälterwand (10, 20, 30) weist eine Abschirmschicht (42) und eine Isolationsschicht (43) auf;
- die Abschirmschicht (42) ist zwischen der Außenschicht (41) und der ersten und zweiten Elektroden (61, 62; 71, 72) angeordnet; und
- die Isolationsschicht (43) ist zwischen der Abschirmschicht (42) und den ersten und zweiten Elektroden (61, 62; 71, 72) angeordnet.

10. Betriebsflüssigkeitsbehälter (1) nach Anspruch 9, **dadurch gekennzeichnet, dass** die Isolationsschicht (43) die gleiche dielektrische Leitfähigkeit wie die Innenschicht (45) und/oder die Außenschicht (41) aufweist.

11. Betriebsflüssigkeitsbehälter (1) nach einem der Ansprüche 5 bis 10, **dadurch gekennzeichnet, dass** ein Abstand der ersten und zweiten Elektroden (61, 62; 71, 72) zu dem Betriebsflüssigkeitsbehälterinnenraum (2) zwischen 1,5 mm und 3,5 mm beträgt.

12. Betriebsflüssigkeitsbehälter (1) nach einem der Ansprüche 5 bis 11, **dadurch gekennzeichnet, dass** zumindest eine der ersten und zweiten Elektroden (61, 62; 71, 72) des Kondensators (60, 70) entlang ihrer Längserstreckung (L) eine ungleichmäßige Breitenerstreckung (B) aufweist.

13. Betriebsflüssigkeitsbehälter (1) nach einem der Ansprüche 5 bis 12, **dadurch gekennzeichnet, dass** zumindest einer der ersten und zweiten Elektroden (61, 62, 71, 72) des Kondensators (60) entlang ihrer Längserstreckung (L) eine sich in Richtung der Bodenwand (10) vergrößernde Breitenerstreckung (B) aufweist.

**Claims**

1. Method for determining an electrical conductivity of an operating liquid in an operating liquid container (1) for a motor vehicle, wherein the operating liquid is deionized water, wherein the operating liquid container (1) comprises at least one capacitor (60, 70) fastened on a container wall (10, 20, 30) of the operating liquid container (1) having a first electrode (61, 71) and a second electrode (62, 72) opposite thereto, wherein the method is **characterized by** the following method steps:

   - applying (A) at least three different AC voltages to the capacitor (60, 70), wherein a first frequency of a first AC voltage corresponds to a lower limiting frequency (fmin) of 10 kHz, a second frequency of a second AC voltage corresponds to a frequency between the lower limiting frequency (fmin) and an upper limiting frequency (fmax) of 1 MHz or 100 kHz, and a third frequency of a third AC voltage corresponds to the upper limiting frequency (fmax);
   - determining and storing (B) a first impedance of the capacitor (60, 70) for the first frequency, a second impedance of the capacitor (60, 70) for the second frequency, and a third impedance of the capacitor (60, 70) for the third frequency;
   - determining (C) a first phase angle ($\varphi$1) from the first impedance, a second phase angle ($\varphi$2) from the second impedance, and a third phase angle ($\varphi$3) from the third impedance; and
   - determining (D) that an operating liquid (50) located in the operating liquid container (1) meets a quality requirement of electrical conductivity between 1 $\mu$S/cm and 50 $\mu$S/cm if the second phase angle ($\varphi$2) is greater than the first phase angle ($\varphi$1) and is greater than the third phase angle ($\varphi$3).

2. Method as claimed in claim 1, **characterized by** the method step:

   - outputting (D1) a release signal if the second phase angle ($\varphi$2) is greater than the first phase angle ($\varphi$1) and is greater than the third phase angle ($\varphi$3).

3. Method as claimed in one of the preceding claims, **characterized by** the method step:

   - outputting (E) a warning signal if the third phase angle ($\varphi$3) is greater than the second phase angle ($\varphi$2) or is equal to the second phase angle ($\varphi$2).

4. Method as claimed in one of the preceding claims, **characterized by** the method step:

   - outputting (F) a stop signal if the difference between the third phase angle ($\varphi$3) and the first phase angle ($\varphi$1) is less than a predetermined minimum loss angle ($\delta$s).

5. Operating liquid container (1) having the following features:

   - an operating liquid container interior (2) is delimited by a ceiling wall (30), a bottom wall (10), and a side wall (20) connecting the bottom wall (10) to the ceiling wall (30);
   - the operating liquid container (1) comprises at least one capacitor (60, 70) fastened to a container wall (10, 20, 30) of the operating liquid container (1) having a first electrode (61, 71) and a second electrode (62, 72);
   - the operating liquid container (1) comprises an electronic evaluation unit (80), which is electrically connected to the first electrode (61, 71) and to the second electrode (62, 72),

   wherein the operating liquid container (1) is **characterized in that** the evaluation unit (80) is designed to execute a method as claimed in at least one of claims 1 to 4.

6. The operating liquid container (1) as claimed in claim 5, **characterized in that** the capacitor (60, 70) is embedded in the container wall (10, 20, 30).

7. The operating liquid container (1) as claimed in one of claims 5 to 6, **characterized by** the following features:

   - the bottom wall (10) comprises a protrusion (11) extending into the operating liquid container interior (2); and
   - the first electrode (71) and the second electrode (72) of the capacitor (70) are embedded in the protrusion (11).

8. The operating liquid container (1) as claimed in one of claims 5 to 7, **characterized by** the following features:

- the container wall (10, 20, 30) comprises an outer layer (41), an inner layer (45) facing toward the operating liquid container interior (2), and an adhesive layer (44) arranged between them;
- the first electrode (61, 71) and the second electrode (62, 72) of the at least one capacitor (60) are arranged between the outer layer (41) and the adhesive layer (44).

9.  The operating liquid container (1) as claimed in one of claims 5 to 8, **characterized by** the following features:

- the container wall (10, 20, 30) comprises a shielding layer (42) and an insulation layer (43);
- the shielding layer (42) is arranged between the outer layer (41) and the first and second electrodes (61, 62; 71, 72); and
- the insulation layer (43) is arranged between the shielding layer (42) and the first and second electrodes (61, 62; 71, 72).

10.  The operating liquid container (1) as claimed in claim 9, **characterized in that** the insulation layer (43) has the same dielectric conductivity as the inner layer (45) and/or the outer layer (41).

11.  The operating liquid container (1) as claimed in one of claims 5 to 10, **characterized in that** a distance of the first and second electrodes (61, 62; 71, 72) to the operating liquid container interior (2) is between 1.5 mm and 3.5 mm.

12.  The operating liquid container (1) as claimed in one of claims 5 to 11, **characterized in that** at least one of the first and second electrodes (61, 62; 71, 72) of the capacitor (60, 70) has a nonuniform width extension (B) along its length extension (L).

13.  The operating liquid container (1) as claimed in one of claims 5 to 12, **characterized in that** at least one of the first and second electrodes (61, 62, 71, 72) of the capacitor (60) has a width extension (B) increasing in the direction of the bottom wall (10) along its length extension (L).

## Revendications

1.  Procédé permettant de déterminer une conductivité électrique d'un liquide de fonctionnement dans un réservoir de liquide de fonctionnement (1) pour un véhicule automobile, dans lequel le liquide de fonctionnement est de l'eau déionisée, dans lequel le réservoir de liquide de fonctionnement (1) présente au moins un condensateur (60, 70) fixé à une paroi de réservoir (10, 20, 30) du réservoir de liquide de fonctionnement (1) et comportant une première électrode (61, 71) et une seconde électrode (62, 72) opposée à celle-ci, dans lequel le procédé est **caractérisé** par les étapes de procédé suivantes :

- application (A) d'au moins trois tensions alternatives différentes au condensateur (60, 70), dans lequel une première fréquence d'une première tension alternative correspond à une fréquence limite inférieure (fmin) de 10 kHz, une deuxième fréquence d'une deuxième tension alternative correspond à une fréquence comprise entre la fréquence limite inférieure (fmin) et une fréquence limite supérieure (fmax) de 1 MHz ou 100 kHz et une troisième fréquence d'une troisième tension alternative correspond à la fréquence limite supérieure (fmax) ;
- détermination et enregistrement (B) d'une première impédance du condensateur (60, 70) pour la première fréquence, d'une deuxième impédance du condensateur (60, 70) pour la deuxième fréquence et d'une troisième impédance du condensateur (60, 70) pour la troisième fréquence ;
- détermination (C) d'un premier angle de phase ($\varphi$1) à partir de la première impédance, d'un deuxième angle de phase ($\varphi$2) à partir de la deuxième impédance et d'un troisième angle de phase ($\varphi$3) à partir de la troisième impédance ; et
- fait de déterminer (D) qu'un liquide de fonctionnement (50) présent dans le réservoir de liquide de fonctionnement (1) satisfait à une exigence de qualité de conductivité électrique comprise entre 1 $\mu$S/cm et 50 $\mu$S/cm lorsque le deuxième angle de phase ($\varphi$2) est supérieur au premier angle de phase ($\varphi$1) et supérieur au troisième angle de phase ($\varphi$3).

2.  Procédé selon la revendication 1, **caractérisé par** l'étape de procédé consistant à :

- émettre (D1) un signal de libération lorsque le deuxième angle de phase ($\varphi$2) est supérieur au premier angle de phase ($\varphi$1) et supérieur au troisième angle de phase ($\varphi$3).

3. Procédé selon l'une des revendications précédentes, **caractérisé par** l'étape de procédé consistant à :

   - émettre (E) un signal d'avertissement lorsque le troisième angle de phase ($\varphi3$) est supérieur au deuxième angle de phase ($\varphi2$) ou égal au deuxième angle de phase ($\varphi2$).

4. Procédé selon l'une des revendications précédentes, **caractérisé par** l'étape de procédé consistant à :

   - émettre (F) un signal d'arrêt lorsqu'une différence entre le troisième angle de phase ($\varphi3$) et le premier angle de phase ($\varphi1$) est inférieure à un angle de perte minimal ($\delta s$) prédéfini.

5. Réservoir de liquide de fonctionnement (1) comportant les caractéristiques suivantes :

   - un espace intérieur de réservoir de liquide de fonctionnement (2) est délimité par une paroi de recouvrement (30), une paroi formant fond (10) et une paroi latérale (20) reliant la paroi formant fond (10) à la paroi de recouvrement (30) ;
   - le réservoir de liquide de fonctionnement (1) présente au moins un condensateur (60, 70) fixé à une paroi de réservoir (10, 20, 30) du réservoir de liquide de fonctionnement (1) et comportant une première électrode (61, 71) et une seconde électrode (62, 72) ;
   - le réservoir de liquide de fonctionnement (1) présente un dispositif d'évaluation (80) électronique qui est connecté électriquement à la première électrode (61, 71) et à la seconde électrode (62, 72),

   dans lequel le réservoir de liquide de fonctionnement (1) est **caractérisé en ce que** le dispositif d'évaluation (80) est configuré pour exécuter un procédé selon au moins l'une des revendications 1 à 4.

6. Réservoir de liquide de fonctionnement (1) selon la revendication 5, **caractérisé en ce que** le condensateur (60, 70) est encastré dans la paroi de réservoir (10, 20, 30).

7. Réservoir de liquide de fonctionnement (1) selon l'une des revendications 5 à 6, **caractérisé par** les caractéristiques suivantes :

   - la paroi formant fond (10) présente une élévation (11) s'étendant dans l'espace intérieur de réservoir de liquide de fonctionnement (2) ; et
   - la première électrode (71) et la seconde électrode (72) du condensateur (70) sont encastrées dans l'élévation (11).

8. Réservoir de liquide de fonctionnement (1) selon l'une des revendications 5 à 7, **caractérisé par** les caractéristiques suivantes :

   - la paroi de réservoir (10, 20, 30) présente une couche extérieure (41), une couche intérieure (45) tournée vers l'espace intérieur de réservoir de liquide de fonctionnement (2) et une couche adhésive (44) disposée entre celles-ci ;
   - la première électrode (61, 71) et la seconde électrode (62, 72) de l'au moins un condensateur (60) sont disposées entre la couche extérieure (41) et la couche adhésive (44).

9. Réservoir de liquide de fonctionnement (1) selon l'une des revendications 5 à 8, **caractérisé par** les caractéristiques suivantes :

   - la paroi de réservoir (10, 20, 30) présente une couche de blindage (42) et une couche d'isolation (43) ;
   - la couche de blindage (42) est disposée entre la couche extérieure (41) et la première et la seconde électrode (61, 62 ; 71, 72) ; et
   - la couche d'isolation (43) est disposée entre la couche de blindage (42) et la première et la seconde électrode (61, 62 ; 71, 72).

10. Réservoir de liquide de fonctionnement (1) selon la revendication 9, **caractérisé en ce que** la couche d'isolation (43) présente la même conductivité diélectrique que la couche intérieure (45) et/ou que la couche extérieure (41).

11. Réservoir de liquide de fonctionnement (1) selon l'une des revendications 5 à 10, **caractérisé en ce qu'**une distance entre la première et la seconde électrode (61, 62 ; 71, 72) et l'espace intérieur de réservoir de liquide de fonctionnement (2) est comprise entre 1,5 mm et 3,5 mm.

12. Réservoir de liquide de fonctionnement (1) selon l'une des revendications 5 à 11, **caractérisé en ce qu'**au moins l'une parmi la première et la seconde électrode (61, 62 ; 71, 72) du condensateur (60, 70) présente une extension en largeur (B) non uniforme le long de son extension longitudinale (L).

13. Réservoir de liquide de fonctionnement (1) selon l'une des revendications 5 à 12, **caractérisé en ce qu'**au moins l'une parmi la première et la seconde électrode (61, 62, 71, 72) du condensateur (60) présente, le long de son extension longitudinale (L), une extension en largeur (B) croissante en direction de la paroi formant fond (10).

Fig. 1

Fig. 2

Fig. 3

Fig. 4

Fig. 5

EP 3 732 473 B1

Fig. 6

Fig. 7A

Fig. 7B

Fig. 7C

EP 3 732 473 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017142253 A1